# FASCICULE DE BREVET EUROPEEN

(11) **EP 1 152 809 B1**
(45) Date de publication et mention de la délivrance du brevet: **16.06.2004**
(21) Numéro de dépôt: 00903775.5
(22) Date de dépôt: 10.02.2000
(51) Int. Cl.: A63H 33/00, G06K 7/08

(54) **JOUET INTERACTIF**
INTERAKTIVES SPIELZEUG
INTERACTIVE TOY

(30) Priorité: 19.02.1999 FR 9902055
(43) Date de publication de la demande: 14.11.2001
(73) Titulaire: Groupe Berchet, 01100 Oyonnax (FR); Simeray, Janick, 92700 Colombes (FR)
(72) Inventeur: SIMERAY, Janick, F-92700 Colombes (FR)
(74) Mandataire: Vuillermoz, Bruno
(86) Numéro de dépôt international: PCT/FR2000/000321
(87) Numéro de publication internationale: WO 2000/048701

(56) Documents cités:
- FR-A- 2 297 066
- US-A- 5 661 470

## Description

L'invention concerne un jouet intelligent et auto-adaptif, susceptible d'entrer en interaction avec des accessoires qui lui sont associés, actionnés par un enfant.

Ce jouet intègre une électronique permettant cette interaction.

Le développement de l'électronique et son intégration dans les jouets permettent une grande diversité et une grande sophistication des fonctions proposées.

Ainsi, au delà des bruitages, motorisations, télécommandes, actuellement largement répandues, les jouets intègrent également des pseudo-intelligences artificielles à l'instar du jouet connu sous la marque déposée « TAMAGOCHI », dont l'écran représente un personnage simulant un être vivant.

On a décrit dans le document FR-A-2 297 066, un jouet susceptible d'interagir avec des accessoires variés. Ces accessoires sont munis d'un aimant, dont le champ magnétique est susceptible de fermer un relais REED intégré dans le jouet, et induisant de la sorte une fonction électrique ou électromécanique. Cette technologie ne permet donc pas la reconnaissance ni l'identification des accessoires.

On a également décrit, dans le document US-A-5 661 470, un système de reconnaissance d'accessoires. Ce système met en oeuvre des résonateurs, intégrés dans lesdits accessoires, et susceptibles d'entrer en résonance lorsqu'il rentre dans le champ de fréquence d'un lecteur, balayant la gamme de fréquences appropriée. Cependant, si certes cette technologie constitue un progrès par rapport à celle décrite dans le paragraphe précédent, elle ne permet pas de mettre en oeuvre un nombre important d'accessoires, et par ailleurs, il n'y a pas d'échange d'informations possible.

La présente invention concerne la mise en oeuvre d'une architecture électronique particulière et originale, destinée à équiper une gamme de jouets et leurs accessoires, de fonctions intelligentes, interactives, auto-adaptatives, simulant éventuellement un être vivant.

Selon l'invention, les jouets équipés de cette architecture électronique sont dépourvus de l'interface technologique traditionnelle que constituent un écran et un clavier.

Ils interagissent directement avec l'enfant par le biais de capteurs et d'actionneurs pilotés par une unité centrale informatique intégrée dans le jouet

Bien entendu, l'invention se rapporte à tout type de jouet susceptible d'intégrer une telle électronique, et notamment les jouets avec accessoires, les jouets d'imitation, ainsi que les jouets de mise en situation.

Parmi ceux-ci, on pourra citer plus particulièrement la poupée et sa gamme d'habits, de mobilier fixe ou roulant, d'accessoires de toilette, de cuisine, de lange, etc...

Dans le même ordre d'idée, on peut également citer les cuisines pour enfant avec une vaisselle complète, les établis ou ateliers pour enfant avec une panoplie d'outils, les circuits, garages avec flotte de véhicules, les paysages avec théorie de personnages, etc...

Bien entendu, ces exemples ne sont nullement limitatifs de la portée de la présente invention.

Selon l'invention, ce jouet comprend un jouet proprement dit associé à une gamme d'accessoires et comporte :
- une ou plusieurs unités centrales, comprenant un microprocesseur ou microcontrôleur, intégré dans le jouet proprement dit ;
- une alimentation électrique autonome destinée à alimenter la ou lesdites unités centrales en énergie électrique ;
- un ensemble d'un ou de plusieurs capteurs et/ou actionneurs, connectés à des interfaces intégrés dans la ou les unités centrales, et destinés à assurer la mise en oeuvre de fonctions de nature diverse ;
- au moins un coupleur inductif relié à au moins l'unité centrale ;
- des accessoires associés au jouet comportant chacun au moins une étiquette inductive, destinée à entrer en interaction électro-magnétique avec ledit coupleur inductif;

Selon l'invention :
- en ce que l'étiquette inductive est constituée par une boucle ou par une bobine connectée à un circuit intégré numérique actif,
- le coupleur inductif relié à l'unité centrale est parcouru par un courant de fréquence déterminée et échange avec lesdites étiquettes inductives des données binaires correspondant à des états de phase ou d'amplitude de la modulation de fréquence.

Selon une caractéristique avantageuse de l'invention, l'unité centrale comporte un dispositif de reconnaissance et d'identification multiple de l'information et ce, de telle sorte à permettre la lecture séquentielle ou simultanée de plusieurs étiquettes inductives situées dans le champ de lecture du coupleur inductif.

Selon une autre caractéristique avantageuse de l'invention, l'unité centrale comporte un dispositif de reconnaissance et d'identification de l'information, de telle sorte à permettre l'écriture d'informations binaires et/ou hexadécimales dans une ou plusieurs étiquettes inductives situées dans le champ de lecture du coupleur inductif.

La manière dont l'invention peut être réalisée et les avantages qui en découlent, ressortiront mieux de l'exemple de réalisation qui suit donné à titre indicatif et non limitatif, à l'appui des figures annexées.
La figure 1 est une représentation schématique de la mise en oeuvre du principe en application avec un poupon.
La figure 2 est une représentation schématique de l'interaction entre l'unité centrale et les accessoires.

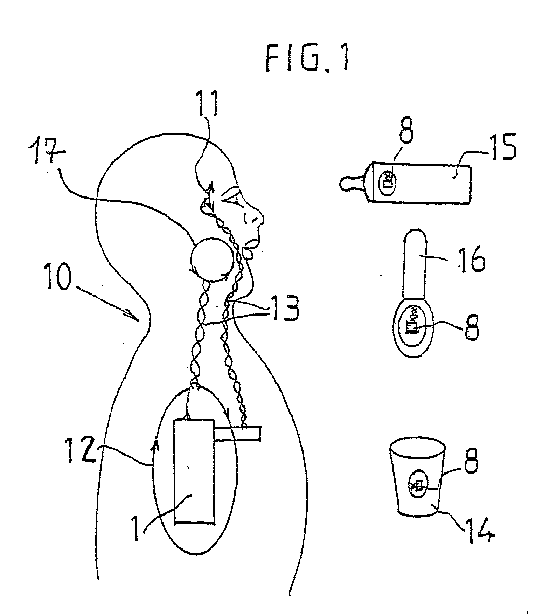

Au sein de la figure 1, a été schématisé un poupon (10), intégrant au moins une unité centrale (1). Avantageusement, il comporte deux unités centrales, respectivement une plus spécifiquement-dédiée à la gestion de la lecture des signaux, l'autre plus spécialement dédiée à la gestion du son, quand le poupon, et de manière générale, quand le jouet est effectivement muni d'une partie son.

On a matérialisé au niveau de l'un des deux yeux un électroaimant (11), destiné à actionner l'ouverture ou la fermeture des yeux. Ce capteur est relié par une liaison filaire (13) avec l'unité centrale (1).

Par ailleurs, on a représenté par deux boucles fermées (12) et (17), respectivement au niveau du tronc et de la bouche du poupon, des coupleurs inductifs, également reliés par liaison filaire avec l'unité centrale (1). Ces coupleurs, au niveau desquels circule un courant électrique de fréquence déterminée, sont destinés à coopérer, et notamment échanger des données avec des étiquettes inductives, mises en place au sein d'accessoires, tels qu'un verre (14), un biberon (15) ou une cuillère (16). Ainsi qu'on peut l'observer sur la figure 1, chacun de ces accessoires est muni d'une étiquette inductive, matérialisée sous la forme d'une boucle fermée (17).

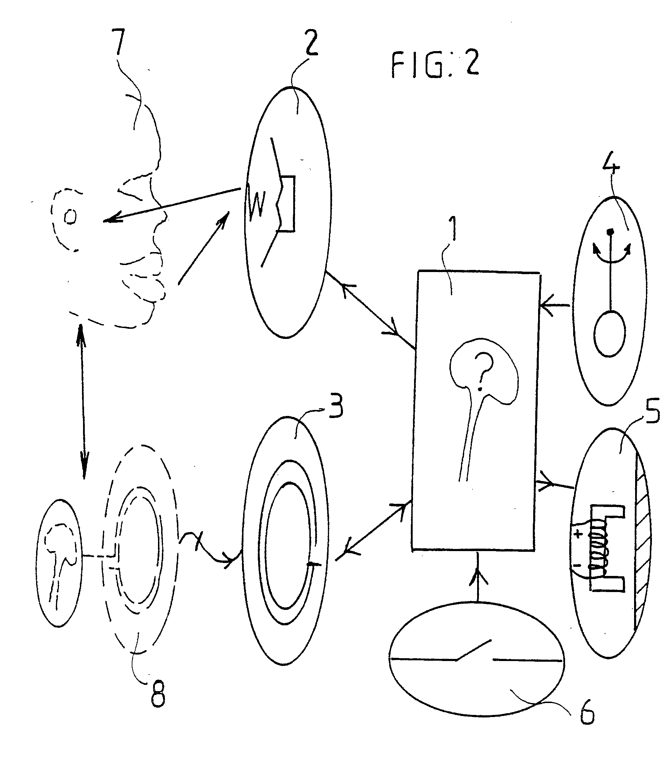

On a représenté sur la figure 2 l'interaction entre l'unité centrale (1), et les différents capteurs, actionneurs ou coupleurs de l'invention.

Cette unité centrale (1) intègre fondamentalement un circuit intégré numérique actif et plus particulièrement un micro-contrôleur ou microprocesseur, muni de toutes les fonctions traditionnelles, de mémoire, d'horloge, et d'interfaces avec des capteurs et actionneurs.

Selon l'invention, l'unité centrale (1) est pilotée par un logiciel qui définit les fonctions en termes de comportement et des interactions du jouet dans lequel est intégrée cette unité centrale (1).

Ce logiciel est implanté dans les mémoires associées à l'unité centrale (non représentées).

Selon l'invention, l'électronique est autonome et comporte sa propre source d'énergie. Cette source est typiquement constituée d'une batterie rechargeable ou une pile, également non représentée.

Selon l'invention, l'électronique comporte une gamme de capteurs, dont les deux principaux types sont les suivants :
◆ un ou plusieurs contacteurs de type switch ou interrupteurs (6) ;
◆ un ou plusieurs capteurs d'attitude gravimétrique (4).

Bien entendu, il peut être possible d'intégrer un ou plusieurs autres capteurs, tels que par exemple des photodiodes, susceptibles de percevoir le visible ou l'infrarouge, mais également d'autres interfaces de communication, notamment optiques, émettant dans le domaine visible ou infrarouge au moyen de diodes électroluminescentes (DEL).

Selon l'invention, l'électronique comporte un seul type d'actionneur (5), du type électromagnétique, tel que un ou plusieurs électroaimants ou des moteurs.

Enfin, selon une caractéristique de l'invention, le circuit électronique de l'unité centrale (1) comporte l'association de deux interfaces de communications :
◆ une première interface, de nature sonore, comportant un micro et un haut-parleur (2) ; éventuellement, le micro et le haut-parleur peuvent être intégrés dans un transducteur unique bidirectionnel ; cette interface sonore agit auprès de l'enfant matérialisé par la référence (7), reproduisant un certain nombre de sons, paroles, musiques, fonction du logiciel associé à l'unité centrale (1) ; cette interface réagit à l'enfant, à ses paroles et à ses bruits. En fonction du degré de sophistication du logiciel, elle rend ainsi possible une discrimination de maturité de timbre vocal, une identification vocale, voire une reconnaissance lexicale ou grammaticale ;
◆ la seconde interface de communication est de nature inductive. Il s'agit d'un coupleur inductif (3, 12, 13), se présentant sous la forme d'une bobine ou d'une boucle parcourue par un courant de fréquence déterminée.

Selon l'invention, l'unité centrale (1) est reliée à au moins un coupleur inductif (3), dont le positionnement, à l'intérieur du jouet proprement dit, va être fonction du type d'interaction recherchée, et notamment de la gamme d'accessoires, avec lesquels il est destiné à entrer en interaction.

Ce coupleur est destiné à interagir avec des étiquettes inductives passives ou actives (8), c'est-à-dire autonomes ou dépourvues de toute source d'énergie propre. Ces étiquettes sont solidarisées avec les accessoires complémentaires du jouet proprement dit, ainsi que déjà mentionné en liaison avec la description de la figure 1.

L'interaction avec l'étiquette inductive s'effectue sous la forme d'un échange de données binaires, le 0 et le 1 correspondant à des états de phase ou d'amplitude de la modulation de la fréquence.

Physiquement, elle est réalisée par couplage inductif faible entre la bobine ou la boucle du capteur (3), et la boucle ou la bobine de l'étiquette (8).

L'étiquette inductive est constituée d'une boucle ou d'une bobine, connectée à un circuit intégré numérique actif, plus communément appelé « puce », et par exemple constitué d'un micro-contrôleur éventuellement associé à une batterie miniature.

Selon l'invention, chaque accessoire comporte au moins une étiquette inductive.

Vont être décrites plus en détail les interactions et les liaisons entre les différents éléments constitutifs du jouet et des accessoires conformes à l'invention.

Le microprocesseur ou micro-contrôleur de l'unité centrale (1) régit toutes les interactions avec les différents éléments, notamment d'interfaces de nature sonore (2), de nature inductive (3), ainsi que les capteurs ou actionneurs (4, 5, 6).

En revanche, il n'existe pas d'interaction directe entre ces différents éléments.

Selon l'invention, les liaisons entre l'unité centrale (1) et ses différents éléments sont électriques et par exemple filaires ou au moyen de pistes conductrices de circuit imprimé.

Le microprocesseur de l'unité centrale (1) reçoit des signaux analogiques du capteur (6), et des signaux logiques ou analogiques des capteurs (4), (3) et (2). L'unité centrale (1) est donc équipée de convertisseurs analogiques - digitaux en entrée de ces signaux.

L'unité de centrale (1) émet un signal de puissance logique ou analogique en direction de l'actionneur (5), et des signaux analogiques en direction des interfaces (2) et (3). L'unité centrale (1) est donc équipée de convertisseurs digitaux - analogiques en sortie.

La liaison entre l'enfant (7) et le micro haut-parleur (2) est sonore, et transmet les sons, les bruits, les musiques et les mots.

La liaison entre les coupleurs (3, 12, 13) et les étiquettes inductives (8) est de nature inductive et transmet des bits de données.

L'enfant (7) manipule les accessoires contenant les étiquettes (8) et joue avec le jouet contenant l'unité centrale (1). Les interactions sont physiques, mécaniques et sonores.

Si l'unité centrale (1) est munie de capteurs optiques, les interactions peuvent être visuelles et optiques.

Le logiciel implanté dans la mémoire associé au microprocesseur (1), définit et synchronise les interactions et les réactions du jouet avec l'enfant et les accessoires, en fonction de la nature du jouet.

Le circuit électronique appliqué à des jouets selon l'invention, équipe par exemple une poupée ou un poupon. Les étiquettes (8) sont réparties dans tous les accessoires, habits, poussettes, berceau, bain, etc...

La poupée interagit avec l'enfant et avec les accessoires selon des scénarios programmés, instruit un dialogue, reconnaît l'enfant par le timbre vocal, réagit à la manipulation et à celles des accessoires, réagit aux attouchements, ouvre et ferme les paupières opportunément, etc..

Le dialogue est par exemple synchronisé à la perception du timbre de l'enfant.

La manipulation est détectée par les contacteurs switch (6) et par le capteur gravimétrique (4).

L'ouverture des paupières est régie par un électro-aimant.

La poupée identifie les accessoires après un échange de code d'identification entre le coupleur d'induction (3) et l'étiquette inductive (8) intégrée dans l'accessoire, ainsi que déjà précisé. En conséquence, la poupée réagit à son environnement et aux interventions de l'enfant. Elle peut également inviter l'enfant à un jeu qui requiert les accessoires, et en contrôler le bon usage.

L'extrême richesse des interactions possibles ne permet pas bien entendu une description exhaustive, ces interactions ne constituant pas les caractéristiques fondamentales de l'invention.

Dans une variante, le système électronique selon l'invention équipe une cuisine pour enfant. Les étiquettes (8) sont placées dans la vaisselle et les casseroles. Les bruitages (de cuisson par exemple) sont synchronisés par rapport aux actions de l'enfant, etc..

Dans une autre application, le système électronique conforme à l'invention équipe un établi ou un atelier, toujours pour enfant. Les étiquettes inductives (8) sont alors intégrées aux outils. Un dialogue peut s'instruire en fonction d'un bricolage imaginaire ou réel.

Le système électronique conforme à l'invention peut équiper dans une autre application un garage, un circuit automobile, les étiquettes inductives (8) étant intégrées aux véhicules. Les bruitages et les dialogues sont adaptés à la circulation des véhicules.

Dans une autre application, le système électronique conforme à l'invention équipe une représentation de paysage, une montagne, une ferme, un ouvrage d'art, une construction, etc.., à l'échelle de l'enfant. Les étiquettes inductives (8) sont placées dans les personnages et les animaux, les bruitages identifient les animaux et les scénarios sont racontés à l'entant en interaction avec ses manipulations.

Dans une version de l'invention, l'unité centrale (1) intègre un système permettant d'éviter toute collision d'informations lors de la réalisation des interactions jouet - accessoires.

Selon une autre version de l'invention, l'unité centrale comporte un système de reconnaissance et d'identification multiple de l'information et ce, de telle sorte à permettre la lecture séquentielle ou simultanée de plusieurs étiquettes inductives situées dans le champ de lecture du coupleur inductif.

Selon l'invention, l'interactivité et l'intelligence du jouet résident dans la richesse de son programme. Pour chaque application, poupée, cuisine, garage, etc..., un logiciel spécifique est mémorisé dans la mémoire associée à l'unité centrale (1), et pour chaque application, une architecture spécifique et une répartition des capteurs sont définies.

Selon une version évoluée de l'invention, le logiciel est évolutif et interchangeable. Pour cela, il est réalisé un branchement avec un micro-ordinateur.

A cet effet, une connexion de type modem, série ou parallèle, avec le circuit électronique de l'unité centrale est prévue. La liaison avec l'ordinateur est alors assurée après branchement de la ligne modem, série ou parallèle, et permet alors toute intervention sur le contenu de la programmation.

On conçoit dès lors tout l'intérêt du dispositif conforme à l'invention, qui, de par le grand nombre d'interactivités possibles, permet de décliner à l'infini les applications, ludiques notamment, des jouets.

## Revendications

1. Jouet comprenant un jouet proprement dit associé à une gamme d'accessoires, et comportant :
• une ou plusieurs unités centrales (1), comprenant un microprocesseur ou microcontrôleur, intégré dans le jouet (10) proprement dit ;
• une alimentation électrique autonome, destinée à alimenter ladite unité centrale en énergie électrique ;
• un ensemble d'un ou de plusieurs capteurs (4) et/ou actionneurs (5), connectés à des interfaces intégrés dans la ou les unités centrales (1), et destinés à assurer la mise en oeuvre de fonctions de nature diverse ;
• au moins un coupleur inductif (3) relié à la ou aux unités centrales (1) ;
• des accessoires (14, 15, 16) associés au jouet (10) comportant chacun au moins une étiquette inductive (8), destinée à entrer en interaction électromagnétique avec ledit coupleur inductif (3) ;
***caractérisé :***
• **en ce que** l'étiquette inductive (8) est constituée par une boucle ou par une bobine connectée à un circuit intégré numérique actif,
• et **en ce que** le coupleur inductif (3) relié à la ou aux unités centrales (1) est parcouru par un courant de fréquence déterminée et échange avec lesdites étiquettes inductives (8) des données binaires correspondant à des états de phase ou d'amplitude de la modulation de la fréquence.

2. Jouet selon la revendication 1, ***caractérisé* en ce que** l'unité centrale (1) est pilotée par un logiciel qui définit les fonctions en termes de comportement et des interactions du jouet dans lequel est intégrée cette unité centrale (1).

3. Jouet selon l'une des revendications 1 et 2, ***caractérisé* en ce que** le jouet proprement dit comporte en outre un transducteur sonore (2), relié à l'unité centrale (1).

4. Jouet selon l'une des revendications 1 à 3, ***caractérisé* en ce que** l'unité centrale comporte un dispositif de reconnaissance et d'identification multiple de l'information et ce, de telle sorte à permettre la lecture séquentielle ou simultanée de plusieurs étiquettes inductives situées dans le champ de lecture du coupleur inductif.

5. Jouet selon l'une des revendications 1 à 3, ***caractérisé* en ce que** l'unité centrale comporte un dispositif de reconnaissance et d'identification de l'information, de telle sorte à permettre l'écriture d'informations binaires et/ou hexadécimales dans une ou plusieurs étiquettes inductives situées dans le champ de lecture du coupleur inductif.

6. Jouet selon l'une des revendications 1 à 5, ***caractérisé* en ce que** le jouet est une poupée ou un poupon, et **en ce que** les accessoires sont notamment constituées pas les habits de ladite poupée ou dudit poupon, des meubles, objets de toilette, de cuisine.

7. Jouet selon l'une des revendications 1 à 5, ***caractérisé* en ce que** le jouet est une cuisine pour enfant et **en ce que** les accessoires associés comprennent notamment la vaisselle, les casseroles.

8. Jouet selon l'une des revendications 1 à 5, ***caractérisé* en ce que** le jouet est un établi ou un atelier de bricolage pour enfant, et **en ce que** les accessoires associés comprennent notamment les outils.

9. Jouet selon l'une des revendications 1 à 5, ***caractérisé* en ce que** le jouet est un élément choisi dans le groupe comprenant les paysages, les ouvrages d'art, les constructions, et **en ce que** les accessoires associés sont constitués par des animaux ou des personnages.

10. Jouet selon l'une des revendications 1 à 5, ***caractérisé* en ce que** le jouet est un garage ou un circuit automobile pour enfant, et **en ce que** les accessoires associés sont constitués par des véhicules.

## Patentansprüche

1. Spielzeug, das ein eigentliches, einer Reihe von Zubehörteilen. zugeordnetes Spielzeug enthält und folgendes umfasst:
• eine oder mehrere Zentraleinheiten (1) mit einem in das eigentliche Spielzeug (10) integrierten Mikroprozessor oder Mikrocontroller;
• eine unabhängige Stromversorgung, welche zur Versorgung der Zentraleinheit mit elektrischer Energie bestimmt ist;
• eine Einheit aus einem oder mehreren Sensoren (4) und/oder Betätigungsgliedern (5), die mit in die Zentraleinheit oder Zentraleinheiten (1) integrierten Schnittstellen verbunden sind und die zum Sicherstellen der Durchführung von Funktionen unterschiedlicher Art bestimmt sind;
• wenigstens einen induktiven Koppler (3), der mit der oder den Zentraleinheit(en) (1) verbunden ist;
• Zubehörteile (14, 15, 16), welche dem Spielzeug (10) zugeordnet sind und jeweils wenigstens ein induktives Etikett (8) aufweisen, das dazu bestimmt ist, mit dem induktiven Koppler (3) in elektromagnetische Wechselwirkung zu treten;
***dadurch gekennzeichnet:***
• **dass** das induktive Etikett (8) von einer Schleife oder von einer Spule gebildet ist, die mit einem aktiven integrierten digitalen Schaltkreis verbunden ist,
• und **dass** der mit der Zentraleinheit oder den Zentraleinheiten (1) verbundene induktive Koppler (3) von einem Strom mit bestimmter Frequenz durchflossen wird und mit den induktiven Etiketten (8) Binärdaten austauscht, die Phasen- oder Amplitudenzuständen der Frequenzmodulation entsprechen.

2. Spielzeug nach Anspruch 1, ***dadurch gekennzeichnet,* dass** die Zentraleinheit (1) von einer Software gesteuert wird, welche die Funktionen bezüglich Verhalten und Wechselwirkungen des Spielzeugs, in das diese Zentraleinheit (1) integriert ist, bestimmt.

3. Spielzeug nach einem der Ansprüche 1 und 2, ***dadurch gekennzeichnet,* dass** das eigentliche Spielzeug außerdem einen Tonwandler (2) aufweist, welcher mit der Zentraleinheit (1) verbunden ist.

4. Spielzeug nach einem der Ansprüche 1 bis *3,* ***dadurch gekennzeichnet,* dass** die Zentraleinheit eine Vorrichtung zur Mebrfacherkennung und -identifikation der Information enthält, und zwar derart, dass das sequentielle oder gleichzeitige Lesen von mehreren, in dem Lesefeld des induktiven Kopplers befindlichen induktiven Etiketten ermöglicht wird.

5. Spielzeug nach einem der Ansprüche 1 bis 3, ***dadurch gekennzeichnet,* dass** die Zentraleinheit eine Vorrichtung zum Erkennen und Identifizieren der Information enthält, so dass das Schreiben von Binär- und/oder Hexadezimalinformationen in eines oder mehrere, in dem Lesefeld des induktiven Kopplers befindliche induktive Etiketten ermöglicht wird.

6. Spielzeug nach einem der Ansprüche 1 bis 5, ***dadurch gekennzeichnet*, dass** das Spielzeug eine Puppe oder Babypuppe ist und dass die Zubehörteile insbesondere von der Kleidung der Puppe oder Babypuppe, von Möbeln, Toilettenartikeln, Küchengegenständen gebildet sind.

7. Spielzeug nach einem der Ansprüche 1 bis 5, ***dadurch gekennzeichnet,* dass** das Spielzeug eine Küche für Kinder ist und dass die zugeordneten Zubehörteile insbesondere Geschirr, Kochtöpfe umfassen.

8. Spielzeug nach einem der Ansprüche 1 bis 5, ***dadurch gekennzeichnet,* dass** das Spielzeug eine Werkbank oder eine Bastelwerkstatt für Kinder ist und dass die zugeordneten Zubehörteile insbesondere Werkzeuge umfassen.

9. Spielzeug nach einem der Ansprüche 1 bis 5, ***dadurch gekennzeichnet,* dass** das Spielzeug ein Element ist, welches ausgewählt ist aus der Gruppe enthaltend Landschaften, Kunstbauten, Bauwerke, und dass die zugeordneten Zubehörteile von Tieren oder Personen gebildet sind.

10. Spielzeug nach einem der Ansprüche 1 bis 5, ***dadurch gekennzeichnet,* dass** das Spielzeug eine Garage oder eine Autorennstrecke für Kinder ist und dass die zugeordneten Zubehörteile von Fahrzeugen gebildet sind.

## Claims

1. Toy comprising a toy proper associated with a range of accessories, and including :
• one or more central processing units, (1), comprising a microprocessor or microcontroller, incorporated into the toy proper (10) ;
• an autonomous electrical supply intended to supply said central processing unit with electrical energy ;
• an assembly of one or more sensors (4) and/or actuators (5) connected to interfaces integrated into the central processing unit or units (1) and intended to carry out functions of various types ;
• at least one inductive coupler (3) connected to the central processing unit or units (1);
• accessories (14, 15, 16) associated with the toy (10), each including at least one inductive label (8) intended to interact electromagnetically with said inductive coupler (3) ;
***characterized :***
• **in that** the inductive label (8) consists of a loop or coil connected to an active digital integrated circuit ;
• and **in that** flowing through the inductive coupler (3) connected to the central processing unit or units (1) is a current of defined frequency and the inductive coupler exchanges with said inductive labels (8) binary data corresponding to phase or amplitude states of the frequency modulation.

2. Toy according to Claim 1, ***characterized in that*** the central processing unit (1) is controlled by software which defines the functions in terms of behaviour and of the interactions of the toy into which this central processing unit (1) is incorporated.

3. Toy according to either of Claims 1 and 2, ***characterized in that*** the toy proper furthermore includes a sound transducer (2) connected to the central processing unit (1).

4. Toy according to one of Claims 1 to 3, ***characterized in that*** the central processing unit includes a device for the multiple recognition and identification of information and does so in such a way as to allow sequential or simultaneous reading of several inductive labels lying within the reading field of the inductive coupler.

5. Toy according to one of Claims 1 to 3, ***characterized in that*** the central processing unit includes a device for the recognition and identification of information, in such a way as to allow binary and/or hexadecimal information to be written into one or more inductive labels lying within the reading field of the inductive coupler.

6. Toy according to one of Claims 1 to 5, ***characterized in that*** the toy is a doll or a baby and **in that** the accessories especially consist of the clothes for said doll or baby, furniture, toilet articles or kitchen articles.

7. Toy according to one of Claims 1 to 5, ***characterized in that*** the toy is a children's kitchen and **in that** the associated accessories comprise especially crockery and saucepans.

8. Toy according to one of Claims 1 to 5, ***characterized in that*** the toy is a children's workbench or do-it-yourself workshop and **in that** the associated accessories comprise in particular the tools.

9. Toy according to one of Claims 1 to 5, ***characterized in that*** the toy is an element chosen from the group comprising scenery, works of art, constructions and **in that** the associated accessories consist of animals or characters.

10. Toy according to one of Claims 1 to 5, ***characterized in that*** the toy is a children's garage or motor-vehicle circuit and **in that** the associated accessories consist of vehicles.
